# EUROPÄISCHE PATENTSCHRIFT

(11) **EP 2 470 810 B1**
(45) Veröffentlichungstag und Bekanntmachung des Hinweises auf die Patenterteilung: **17.06.2015**
(21) Anmeldenummer: 10743152.0
(22) Anmeldetag: 18.08.2010
(51) Int. Cl.: F16H 55/17, F16H 55/06, F02N 15/04

(54) **ZWISCHENLAGEREINRICHTUNG MIT VERZAHNUNGSVERSTÄRKUNG FÜR STARTER**
INTERMEDIATE BEARING DEVICE WITH TOOTHING REINFORCEMENT FOR STARTER
SYSTÈME DE PALIER INTERMÉDIAIRE À RENFORCEMENT DE DENTURE POUR DÉMARREUR

(30) Priorität: 27.08.2009 DE 102009028926
(43) Veröffentlichungstag der Anmeldung: 04.07.2012
(73) Patentinhaber: Robert Bosch GmbH, 70442 Stuttgart (DE)
(72) Erfinder: FISCHER, Thomas, 31137 Hildesheim (DE); BILSING, Thomas, 74357 Boennigheim (DE); PAVEL, Zsolt, H-3526 Miskolc (HU)
(86) Internationale Anmeldenummer: PCT/EP2010/062037
(87) Internationale Veröffentlichungsnummer: WO 2011/023611

(56) Entgegenhaltungen:
- DE-A1- 10 006 160
- DE-A1-102005 013 134
- DE-C1- 4 302 854
- US-A1- 2008 146 402

## Beschreibung

Die Erfindung betrifft eine Zwischenlagereinrichtung für eine Andrehvorrichtung, insbesondere für einen Starter zum Andrehen einer Brennkraftmaschine, gemäß dem Oberbegriff des Anspruchs 1.

Weiter betrifft die Erfindung eine Andrehvorrichtung, insbesondere einen Starter zum Andrehen einer Brennkraftmaschine, nach dem Oberbegriff des Anspruchs 7.

Zudem betrifft die Erfindung ein System umfassend eine Brennkraftmaschine und einen Starter zum Andrehen der Brennkraftmaschine nach dem Oberbegriff des Anspruchs 8.

### Stand der Technik

Die Erfindung geht aus von einem System mit einem Starter oder Startermotor und einem Starter mit internem Untersetzungsgetriebe und einem Getriebe zur Reduzierung der Drehzahl bei gleichzeitiger Erhöhung des Drehmoments nach Gattung der unabhängigen Ansprüche.

Gegenstand der vorliegenden Erfindung sind Anlasser für Fahrzeuge mit Verbrennungsmotoren.

Aus dem Stand der Technik sind Anlasser für Fahrzeuge mit Verbrennungsmotoren bekannt, die in der Regel einen Gleichstromelektromotor zum Antreiben des Verbrennungsmotors umfassen.

In derartigen Startern oder Startermotoren ist für ein Einspuren oder einen Hub in den Zahnkranz beispielsweise ein Relais-Gabelhebelsystem und ein Steilgewinde verantwortlich. Der Hub, auch als Distanz bezeichnet, oder genauer eine Einspurbewegung setzt sich wie folgt zusammen: Ein Magnetrelais zieht einen Gabelhebel nach hinten. Gleichzeitig wird über eine Übersetzung ein Freilaufgetriebe nach vorne geschoben. Wenn das Relais geschaltet wird, fängt ein Elektromotor sich an zu drehen. Dabei wird das auf einer Antriebswelle, die auch je nach Konvention als Abtriebswelle bezeichnet werden kann, sitzende Steilgewinde gedreht und ein Mitnehmer über Flanken des Steilgewindes nach vorne geschoben. Diese axiale und radiale Bewegung in Verbindung mit einer Einspurfeder dient zum leichteren Finden von Zahnlücken im Zahnkranz. Gleichzeitig wird dabei das Steilgewinde zur Kraft- bzw. Drehmomentübertragung genutzt.

Bei bekannten Startermotoren, Startern oder auch Andrehvorrichtungen ist ein Vorgelege üblicherweise als Planetengetriebe mit axial feststehendem, in Umfangsrichtung federelastisch im Gehäuse aufgenommenen Hohlrad ausgebildet. Das Sonnenrad wird von einem Andrehmotor angetrieben und es erfolgt durch das Planetengetriebe eine Übersetzung ins Langsame zum Andrehritzel. Dies ist erforderlich, um zu Anfang des Startvorgangs ein hohes Drehmoment am Andrehritzel für das Andrehgetriebe der Brennkraftmaschine zu erreichen.

Aus der DE 199 27 905 A1 ist eine Andrehvorrichtung für Brennkraftmaschinen mit einem Andrehmotor bekannt, dessen Antriebswelle über ein als Planetengetriebe ausgebildetes Vorgelege mit einem axial verschiebbaren Mitnehmer in Wirkverbindung steht, der Teil eines Einspurgetriebes mit Freilauf und Andrehritzel ist. Dieses wird durch axiales Verschieben des Mitnehmers mit dem Zahnkranz des Antriebsgetriebes der Brennkraftmaschine in Eingriff gebracht. Das Planetengetriebe weist ein an der Antriebswelle ausgebildetes Sonnenrad auf, welches über Planetenräder mit einem Hohlrad in Wirkverbindung steht. Dieses ist in einem entgegen der Andrehrichtung sperrenden Freilaufring gelagert, welcher selbst fest im Gehäuse der Andrehvorrichtung angeordnet ist. Mit Hilfe von am Planetenträger schwenkbar angeordneten Fliehgewichten kann das Hohlrad zwecks Übersetzungsänderung des Planetengetriebes drehzahlabhängig in kraftschlüssige Verbindung mit dem Planetenträger gebracht werden und die Sperre des Freilaufes in Andrehrichtung lösen.

Die DE 43 02 854 C1 welche der nächsten Stand der Technik darstellt, beschreibt eine Andrehvorrichtung für Brennkraftmaschinen mit einem Andrehmotor, dessen Antriebswelle über eine Freilaufkupplung mit einem axial verschiebbaren Einspurritzel verbunden ist, welches in einem Zahnkranz der Brennkraftmaschine einspurt, und mit einem bei Drehung, insbesondere in Antriebsrichtung, ansprechenden Federspeicher im Antriebsstrang zwischen Einspurritzel und Antriebswelle des Andrehmotors, die Drehmomentanstöße zwischen Einspurritzel und Antriebswelle dämpft. Die Andrehvorrichtung der D1 zeichnet sich dadurch aus, dass der Federspeicher mit einem in Antriebsrichtung wirksamen Vorspanndrehmoment im Antriebsstrang angeordnet ist, welches 15% bis 50% des auf die Ritzeldrehung bezogenen Kurzschlussdrehmomentes des Andrehmotors beträgt, und dass das Verhältnis der Verdrehsteifigkeit des vom Andrehmotor bis zum Einspurritzel gebildeten Antriebsstranges der Andrehvorrichtung ohne Federspeicher und auf das Kurzschlussmoment bezogen zu der am Einspurritzel wirksamen Verdrehsteifigkeit des Federspeichers größer 4 ist.

Die DE 10 2005 013 134 A1 beschreibt ein Zahnrad mit einem metallischen Grundkörper, an dem radial Zähne aus einem Kunststoff angeordnet sind, wobei der Grundkörper zumindest einen radial abstehenden Bereich aufweist, der sich bis in einen Zahn erstreckt Die radial abstehenden Bereiche entsprechen in ihrer Funktion den Mitteln zur Erhöhung einer Verzahnungsbeständigkeit. Auf den metallischen Grundkörperentsprechend dem Basisabschnitt - ist an lediglich einer Seite - aus radialer Richtung betrachtet - der Kunststoff angebracht, beispielsweise durch Aufspritzen. Es handelt sich hierbei folglich um eine Schichtung aus dem Grundkörper und dem Kunststoff.

Derartige Starter oder Andrehvorrichtungen zum Anlassen von Verbrennungsmotoren sind bisher mit einem Zwischenlager aus Thermoplastwerkstoff oder einem Zwischenlager aus Thermoplastwerkstoff in Kombination mit einem Hohlrad aus Sinterstahl, auch als Sinterhohlrad bezeichnet, und mehreren Dämpfungsgummis hergestellt. Bei einer Belastung des Planetengetriebes beim Startvorgang, kann es bei einem Zwischenlager aus Thermoplastwerkstoff unter ungünstigen Kraftverhältnissen zum Bruch oder zum Schmelzen der Verzahnung am Zwischenlager kommen. Auch bei einem Zwischenlager aus Thermoplastwerkstoff mit einem Hohlrad aus Sinterstahl und mehreren Dämpfungsgummis kann es aufgrund der meist dünnen Wandstärke des Sinterhohlrades zum Bruch des Sinterhohlrades kommen.

### Offenbarung der Erfindung

Die erfindungsgemäße Zwischenlagereinrichtung, die erfindungsgemäße Andrehvorrichtung und das erfindungsgemäße System mit den Merkmalen des entsprechenden Hauptanspruches oder nebengeordneten Anspruches haben dem gegenüber den Vorteil, dass durch Mittel zur Erhöhung einer Verzahnungsbeständigkeit Brüche oder übermäßiger Verschleiß von Zähnen oder von Verzahnungen an dem Zwischenlager verhindert werden. Durch eine optimierte Integration dieser Mittel ist eine kleinbauende und sehr stabile Zwischenlagereinrichtung mit einem verschleißfesten Verzahnungsbereich realisiert. Die Mittel können als Ring aus einem unterschiedlichen Material gegenüber dem Material des Verzahnungsbereichs ausgebildet werden, bevorzugt aus einem verschleißfesteren Material wie Stahl oder Sinterstahl. Die Mittel können ganz oder teilweise in den Verzahnungsbereich integriert sein. Durch eine geeignete Integration ist ein Verbundverzahnungsbereich realisiert, der aufgrund der unterschiedlichen Werkstoffe für die auftretenden Belastungen optimiert ist.

Die erfindungsgemäße Zwischenlagereinrichtung für eine Andrehvorrichtung, insbesondere für einen Starter zum Andrehen einer Brennkraftmaschine, umfassend ein Zwischenlager mit einem Verzahnungsbereich mit einem Basisabschnitt und daran ausgebildeten Verzahnungsabschnitten zum lagernden Aufnehmen von Zahnrädern, wobei der Verzahnungsbereich aus einem Material hergestellt ist, weist ein als Kunststoffzwischenlager ausgebildetes Zwischenlager auf. Der Verzahnungsbereich besteht dabei vorzugsweise im Wesentlichen aus einem Thermoplastwerkstoff, wodurch eine leichte Bauweise realisierbar ist. Zudem ist der Verzahnungsbereich mit diesem Material einfach und in Serienfertigung leicht herstellbar. Bevorzugt ist eine geeignete Werkstoffpaarung von Verzahnungsbereich und Verstärkungskörper ausgewählt, sodass ein geeigneter Verbundverzahnungsbereich realisierbar ist. Dabei sind die Mittel in den Verzahnungsbereich eingesetzt, eingepresst und/oder mittels Spritzgießen, wie beispielsweise Umspritzen, integriert. Auf diese Weise ist eine einfache Herstellung einer erfindungsgemäßen Zwischenlagereinrichtung realisierbar. Zudem ist vorgesehen, dass die Mittel als mindestens ein, zumindest teilweise an die Kontur des Verzahnungsbereichs angepasster Verstärkungskörper ausgebildet sind. Der Verstärkungskörper ist ringförmig geformt und aus einem unterschiedlichen Material gegenüber dem Material des Verzahnungsbereiches ausgebildet. Es können mehrere solcher Körper vorgesehen sein, die beispielsweise parallel oder in Reihe zueinander angeordnet sind. Die Körper sind in einer Ausführungsform miteinander verbunden, beispielsweise federnd oder dämpfend.

Darüberhinaus ist vorgesehen, dass die Mittel zur Erhöhung einer Verzahnungsbeständigkeit zumindest teilweise in dem Basisabschnitt und/oder in den Verzahnungsabschnitten integriert sind. Üblicherweise umfasst ein verzahntes Element oder Bauteil, beispielsweise ein Zahnrad oder eine Zahnstange, einen Basisteil oder einen Grundkörper, und einen davon abragenden Verzahnungsabschnitt mit den Zähnen. Beide zusammen bilden einen Verzahnungsabschnitt. Die Mittel sind in einer Ausführungsform in dem Basisbereich integriert. Dabei sind die Mittel symmetrisch oder asymmetrisch anordenbar. In einer anderen Ausführungsform sind die Mittel in dem Verzahnungsabschnitt ausgebildet. In einer bevorzugten Ausführungsform sind die Mittel sowohl in dem Verzahnungsabschnitt als auch in dem Basisabschnitt ausgebildet, um möglichst effektiv ein Verzahnungsbruchrisiko zu senken. Die Mittel können mehrere Verstärkungskörper umfassen, die zumindest teilweise miteinander gekoppelt sind. Alternativ sind die Verstärkungskörper separat zueinander ausgebildet. In einer bevorzugten Ausführungsform sind die Mittel als einteiliger Verstärkungskörper ausgebildet. Dieser ist so geformt, dass dieser sich zumindest teilweise über den Basisabschnitt und den Verzahnungsabschnitt erstreckt. Der Verstärkungskörper ist bevorzugt an eine Kontur des Verzahnungsbereichs angepasst, beispielsweise bei einem Zahnrad als ringförmiger Körper. Der ringförmiger Körper verläuft in einer Ausführungsform etwa wellenförmig, wobei Wellenberge in den Verzahnungsabschnitt ragen und Wellentäler in den Basisabschnitt. In einer weiteren bevorzugten Ausführungsform sind an dem Verzahnungskörper Anformungen oder Vorsprünge ausgebildet. Der Verzahnungskörper verläuft dabei beispielsweise in dem Basisabschnitt. Die Anformungen oder Vorsprünge ragen zumindest teilweise in den Verzahnungsabschnitt, das heißt in die einzelnen Zähne, hinein.

Durch die in den abhängigen Ansprüchen aufgeführten Maßnahmen sind vorteilhafte Weiterbildungen und Verbesserungen der in den unabhängigen und nebengeordneten Ansprüchen vorgegebenen Vorrichtungen möglich.

In einer vorteilhaften Ausführungsform ist vorgesehen, dass der Verbundverzahnungsbereich und/oder die Mittel sich im Wesentlichen über den gesamten Verzahnungsbereich zumindest in eine Dimension erstrecken, das heißt axial, radial und/oder umfänglich. Auf diese Weise lassen sich Zahnräder, die ganzumfänglich belastet werden, entsprechend verstärken. Alternativ, beispielsweise bei nur teilweise belasteten Verzahnungsbereichen, lassen sich nur die belasteten Verzahnungsbereiche entsprechend verstärken.

In einer vorteilhaften Ausgestaltung ist deshalb vorgesehen, dass die Mittel aus einem gegenüber dem Material des Verzahnungsbereiches, insbesondere gegenüber einem Thermoplastwerktsoff, festigkeitsbeständigeren Material, insbesondere ausgewählt aus der Gruppe umfassen Stahl, Sinterstahl, Duroplastwerkstoff und dergleichen, hergestellt sind. Mit diesen Werkstoff- oder Materialpaarungen sind optimale Verbundverzahnungsbereiche für einen Einsatz in einem Starter realisierbar.

Vorzugsweise ist vorgesehen, dass die Mittel zur Erhöhung der Verzahnungsbeständigkeit nachträglich in den Verzahnungsbereich eingebracht. Somit sind entsprechende Verzahnungsbereiche nachrüstbar ausgebildet. Der Ring ist bevorzugt als Einlegeteil ausgebildet. Dieser wird in einem Ausführungsbeispiel mit einem Thermoplastmaterial umspritzt.

In einer weiteren vorteilhaften Ausgestaltung der Erfindung ist vorgesehen, dass die Mittel Ausnehmungen aufweisen, in welchen das Material des Verzahnungsbereichs, also ein Verzahnungskörper, zumindest teilweise hineinragt, für eine optimierte Integration der Mittel in den Verzahnungsbereich. Durch Ausnehmungen oder Unterbrechungen, beispielsweise Durchgangsöffnungen, ist eine bessere Vernetzung des Werkstoffs für den Verzahnungsbereich um und/oder durch den Verstärkungskörper realisierbar. Der Verstärkungskörper wird beispielsweise verbessert von dem Thermoplastwerkstoff umflossen. Hierdurch wird ein verbesserter Festsitz des Verstärkungskörpers im Zwischenlager gewährleistet.

Nicht zuletzt ist in einer weiteren vorteilhaften Ausgestaltung vorgesehen, dass der Verzahnungsbereich als ringförmiger Zahnradhohlträger ausgebildet und die als ein in dem Basisabschnitt umlaufender Ring mit in die Verzahnungsabschnitte hereinragenden Anformungen ausgebildeten Mittel derart integriert sind, dass sich die Mittel im Wesentlichen in umfänglicher und radialer Richtung in dem Verzahnungsbereich erstrecken. Auf diese Weise ist das Zwischenlager für einen optimierten Einsatz in einem Startermotor ausgebildet.

Die Andrehvorrichtung, insbesondere ein Starter zum Andrehen einer Brennkraftmaschine, umfassend ein Zwischenlager mit einer Lagerstelle für eine Abtriebswelle, wobei das Zwischenlager als eine Zwischenlagereinrichtung ausgebildet ist, umfassend einen Verzahnungsbereich mit einem Basisabschnitt und daran ausgebildeten Verzahnungsabschnitten, zum lagernden Aufnehmen von Zahnrädern, wobei der Verzahnungsbereich als Verbundverzahnungsbereich ausgebildet ist, in dem Mittel zur Erhöhung einer Verzahnungsbeständigkeit integriert, nämlich eingesetzt, eingepresst und/oder umspritzt, sind, sodass die Mittel zumindest teilweise in dem Basisabschnitt und/oder in den Verzahnungsabschnitten integriert sind, hat gegenüber dem Stand der Technik den Vorteil, dass Zahnbrüche am Zwischenlager wirksam verhindert sind und so die Lebensdauer einer Andrehvorrichtung drastisch vergrößert ist. Zudem sinkt die Anzahl und die Häufigkeit der Wartungsintervalle. Dabei weist Zwischenlagereinrichtung erfindungsgemäß ein als Kunststoffzwischenlager ausgebildetes Zwischenlager auf, bei dem der Verzahnungsbereich vorzugsweise im Wesentlichen aus einem Thermoplastwerkstoff besteht, wodurch eine leichte Bauweise realisierbar ist. Hierbei sind die Mittel in den Verzahnungsbereich eingesetzt, eingepresst und/oder mittels Spritzgießen, wie beispielsweise Umspritzen, integriert. Auf diese Weise ist eine einfache Herstellung einer erfindungsgemäßen Zwischenlagereinrichtung realisierbar. Zudem ist vorgesehen, dass die Mittel zur Erhöhung der Verzahnungsbeständigkeit, die zumindest teilweise in dem Basisabschnitt und/oder in den Verzahnungsabschnitten integriert sind, als mindestens ein, zumindest teilweise an die Kontur des Verzahnungsbereichs angepasster ringförmiger Verstärkungskörper aus einem unterschiedlichen Material gegenüber dem Material des Verzahnungsbereiches ausgebildet sind.

Das erfindungsgemäße System umfassend eine Brennkraftmaschine und einen Starter zum Andrehen der Brennkraftmaschine, wobei der Starter zum Andrehen der Brennkraftmaschine als Andrehvorrichtung umfassend ein Zwischenlager mit einer Lagerstelle für eine Abtriebswelle ausgebildet ist, wobei das Zwischenlager als eine Zwischenlagereinrichtung ausgebildet ist, umfassend einen Verzahnungsbereich mit einem Basisabschnitt und daran ausgebildeten Verzahnungsabschnitten, zum lagernden Aufnehmen von Zahnrädern, wobei der Verzahnungsbereich als Verbundverzahnungsbereich ausgebildet ist, in dem Mittel zur Erhöhung einer Verzahnungsbeständigkeit integriert sind, nämlich eingesetzt, eingepresst und/oder umspritzt sind, sodass die Mittel zumindest teilweise in dem Basisabschnitt und/oder in den Verzahnungsabschnitten integriert sind, weist gegenüber dem Stand der Technik den Vorteil auf, dass ein solches System mit den Mitteln leicht nachrüstbar ist, eine verbesserte Lebensdauer aufweist, es zu weniger Störungen im Betriebsablauf kommt und ein einfacher Aufbau garantiert ist. Dabei weist Zwischenlagereinrichtung erfindungsgemäß ein als Kunststoffzwischenlager ausgebildetes Zwischenlager auf, bei dem der Verzahnungsbereich vorzugsweise im Wesentlichen aus einem Thermoplastwerkstoff besteht, wobei die Mittel zur Erhöhung der Verzahnungsbeständigkeit als mindestens ein, zumindest teilweise an die Kontur des Verzahnungsbereichs angepasster ringförmiger Verstärkungskörper aus einem unterschiedlichen Material gegenüber dem Material des Verzahnungsbereiches ausgebildet sind.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: in einer perspektivischen Ansicht eine teilweise geschnittene Zwischenlagereinrichtung,
- Figur 2: in einer perspektivischen Ansicht eine teilweise geschnittene weitere Ausführungsform einer Zwischenlagereinrichtung,
- Figur 3: in einer perspektivischen Ansicht eine teilweise geschnittene weitere Ausführungsform einer Zwischenlagereinrichtung,
- Figur 4: in einer perspektivischen Ansicht eine teilweise geschnittene weitere Ausführungsform einer Zwischenlagereinrichtung und
- Figur 5: in einer geschnittenen Ansicht ein Detail eines Verbundverzahnungsbereichs.

### Beschreibung des Ausführungsbeispiels

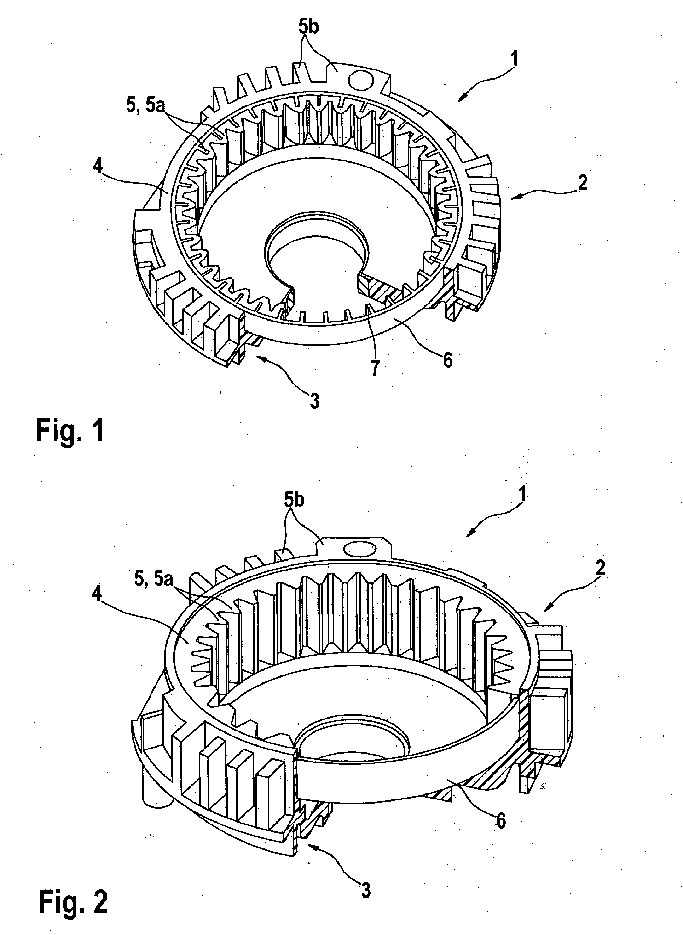

Fig. 1 zeigt in einer perspektivischen Ansicht eine teilweise geschnittene Zwischenlagereinrichtung 1 für eine Andrehvorrichtung, insbesondere für einen Starter zum Andrehen einer Brennkraftmaschine. Die Zwischenlagereinrichtung umfasst ein etwa topfförmiges Zwischenlager 2 mit einem ringförmigen Verzahnungsbereich 3. Der Verzahnungsbereich 3 umfasst einen im Wesentlichen ringförmigen Basisabschnitt 4 rund Verzahnungsabschnitte 5, die als von dem Basisabschnitt 4 radial nach innen ragende Zähne 5a ausgebildet sind. Nach außen ragen radial verschiedenste Anformungen 5b von dem Basisabschnitt 4 weg. In den Verzahnungsbereich 3 ist ein etwa ringförmiger Verstärkungskörper 6 integriert, der ein Mittel zur Erhöhung einer Verzahnungsbeständigkeit ausbildet. In eine axiale Richtung der Zwischenlagereinrichtung, etwa in einem rechten Winkel zu einem Boden des topfförmigen Zwischenlagers 2, erstreckt sich der Verstärkungskörper 6 etwa über die gesamte Breite des Verzahnungsabschnitts 5. Dabei schließt der Verstärkungskörper 6 an einer Stirnseite etwa bündig mit dem Verzahnungsabschnitt 3 ab, sodass der Verstärkungskörper 6 nicht von dem Verzahnungsbereich 3 verdeckt ist. Der Verstärkungskörper 6 ist an die Kontur des Verzahnungsbereichs 3 angepasst und erstreckt sich in umfängliche Richtung über den gesamten, ebenfalls ringförmig ausgebildeten Basisabschnitt 4. Von dem Verstärkungskörper 6 ragen in die einzelnen Verzahnungsabschnitte 5 Anformungen 7 hinein, sodass sich der Verstärkungskörper 6 sowohl radial, umfänglich und axial in die Kontur des Verzahnungsbereichs 3 erstreckt. Ein von dem Verzahnungsbereich 3 in axialer Richtung nicht verdeckter Verstärkungskörper 6 kann nachträglich in das Zwischenlager 2 integriert werden. Hierfür wird eine entsprechende Ausnehmung in dem Zwischenlager 2 ausgeformt. In anderen Ausführungsformen wird der Verstärkungskörper 6 komplett von dem Verzahnungsbereich umschlossen, beispielsweise durch Herstellung als Spritzgussteil.

Figur 2 zeigt in einer perspektivischen Ansicht eine teilweise geschnittene weitere Ausführungsform einer Zwischenlagereinrichtung 1. Die Zwischenlagereinrichtung 1 ist im Wesentlichen gleich zu der Zwischenlagereinrichtung 1 nach Fig. 1 ausgebildet. Der wesentliche Unterschied zwischen den Ausführungsformen nach Fig. 1 und Fig. 2 ist, dass der Verstärkungskörper 6 in dem Ausführungsbeispiel nach Fig. 2 komplett von dem Verzahnungsbereich 3 umschlossen ist. Zudem weist der ringförmige Verstärkungskörper 6 keine radial abstehenden Abformungen auf, sodass dieser lediglich in dem Basisabschnitt 4 des Verzahnungsbereichs 3 verläuft.

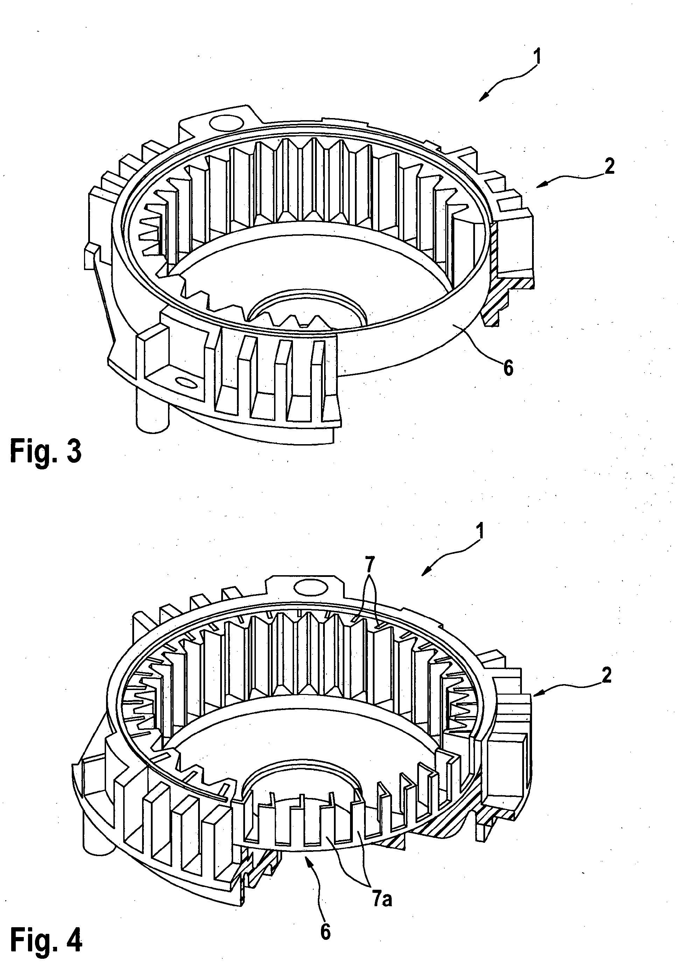

Figur 3 zeigt in einer perspektivischen Ansicht eine teilweise geschnittene weitere Ausführungsform einer Zwischenlagereinrichtung 1. Das Ausführungsbeispiel nach Fig. 3 stellt eine Kombination aus den Ausführungsbeispielen nach Fig. 1 und Fig. 2 dar. Das Zwischenlager 2 entspricht dem Zwischenlager nach Fig. 1. Der ringförmige Verstärkungskörper 6 entspricht dem Verstärkungskörper nach Fig. 2, das heißt, er weist keine radialen Erstreckungen auf. Der Verstärkungskörper 6 ist beispielsweise ähnlich Fig. 1 in eine schlitzförmige Ausnehmung des Zwischenlagers 2 eingepresst. Das heißt, die Zwischenlagereinrichtung 1 nach Fig. 3 entspricht der Zwischenlagereinrichtung 1 nach Fig. 1, außer dass die Anformungen 7 nicht vorhanden sind.

Figur 4 zeigt in einer perspektivischen Ansicht eine teilweise geschnittene weitere Ausführungsform einer Zwischenlagereinrichtung 1. Die Ausführungsform nach Fig. 4 entspricht im Wesentlichen der nach Fig. 1, außer dass der Verstärkungskörper 6 mit den daran angeordneten Anformungen 7 unterschiedlich ausgebildet ist. Die Anformungen 7 nach Fig. 4 sind in einem Bereich als etwa L-förmige, schaufelartig hervorragende Anformungen 7a ausgebildet. In einem anderen Bereich, sind die Anformungen 7 analog zu den Anformungen nach Fig. 1 ausgebildet, das heißt, es sind unterschiedlichen Anformungen 7, 7a vorgesehen. Ebenso weist der Verstärkungskörper 6 unterschiedliche Bereiche auf, die hinsichtlich ihrer Breite, das heißt in ihrer axialen Erstreckung voneinander abweichen. In einem Bereich ist die Breite des Verstärkungskörpers 6 auf ein Minimum reduziert, gerade ausreichend, um die Anformungen 7a zu halten und miteinander zu verbinden. In dem anderen Bereich entspricht die Breite des Verstärkungskörpers etwa der nach Fig. 1, wobei ein kleiner Überstand des Verstärkungskörpers 6 über den Verzahnungsbereich 3 vorgesehen ist.

Durch die so geschaffenen Öffnungen in einem Bereich des Verstärkungskörpers 6 ist ein verbesserter Festsitz des Verstärkungskörpers 6 in dem Zwischenlager 2 realisiert. Der Werkstoff des Zwischenlagers 2 kann so den Verstärkungskörper 6 beispielsweise bei einer Herstellung als Spritzteil verbessert umfließen, wodurch dieser integriert ist.

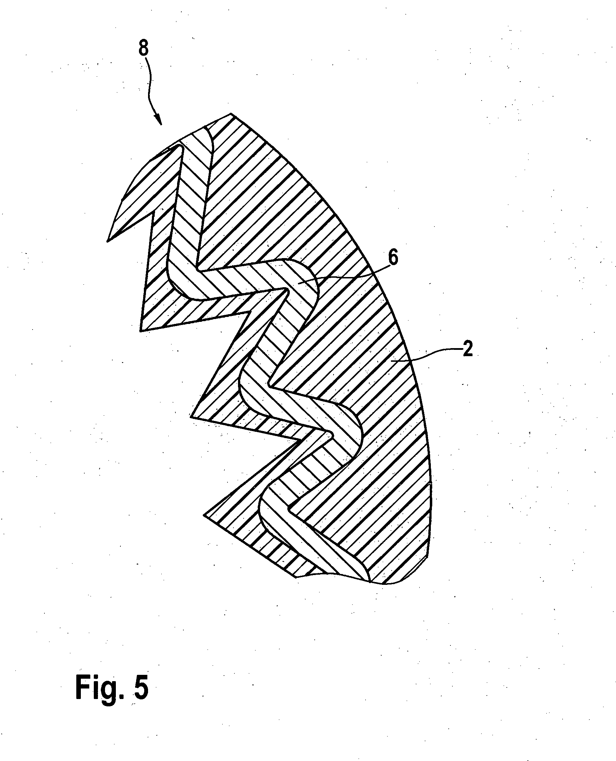

Figur 5 zeigt in einer geschnittenen Ansicht ein Detail eines Verbundverzahnungsbereichs 8. In dem dargestellten Bereich 8 ist ein an die Verzahnungsgeometrie des Verzahnungsabschnitts 5 angepasster Verstärkungskörper 6, der somit etwa zick-zack-förmig oder schlangenförmig ausgebildet ist, etwa parallel zu einer Oberfläche des Verzahnungsabschnitts. Der Verstärkungskörper 6 ist in dem Ausführungsbeispiel als Metall- oder Stahlring ausgebildet. Das Zwischenlager 2 ist als Kunststoffzwischenlager ausgebildet.

In allen Ausführungsbeispielen gemäß der Fig. 1 bis 5 ist das Zwischenlager 2 aus einem Kunststoff wie Thermoplastwerkstoff hergestellt. Der Verstärkungskörper 6 ist dabei stets als Ring aus Stahl, Sinterstahl oder Duroplastwerkstoff ausgebildet. In dem Ausführungsbeispiel nach Fig. 1 ist der Ring in das Zwischenlager 2 mittels Spritzgießen, beispielsweise durch Umspritzen des Rings, integriert. Der Ring ist in Fig. 1 so ausgeführt, dass er bis in die Spitzen der Zähne hineinragt. In einer zweiten Ausführungsform ist der Ring so ausgeführt, dass er nicht bis in die Spitzen der Zähne hineinragt, sondern nur den Umfang des Verzahnungsbereichs stabilisiert (Ausführungsbeispiel nach Fig. 2). In dem dritten Ausführungsbeispiel ist der Ring so ausgeführt, dass er erst nach dem Spritzen des Zwischenlagers 2 in das Zwischenlager 2 eingepresst wird (Ausführungsform nach Fig. 3). Zum besseren Einpressen weist der Ring hierzu keine Anformungen 7, 7a auf. Aufgrund der höheren Festigkeit und Temperaturbeständigkeit des Ringwerkstoffes gegenüber dem Thermoplastwerkstoff des Zwischenlagers 2 wird ein Bruch der Verzahnung verhindert. Auch wenn der Ring nicht bis in die Spitzen der Zwischenlagerverzahnung hineinragt, wird das Zwischenlager 2 bei Belastung und Wärmeeintrag stabilisiert. Bei Erwärmung des Thermoplastwerkstoffes verringert sich dessen Zugfestigkeit. Die Verzahnung wird weich und verformt sich. Mit einem eingelagerten oder eingepressten Ring aus temperaturfestem Material wird das verhindert. In dem vierten Ausführungsbeispiel weist der Ring Öffnungen auf. Dadurch wird der Ring besser von dem Thermoplastwerkstoff umflossen (Ausführungsbeispiel nach Fig. 4). Der Festsitz des Ringes im Zwischenlager 2 wird dadurch noch besser gewährleistet.

## Patentansprüche

1. Zwischenlagereinrichtung (1) für eine Andrehvorrichtung, insbesondere für einen Starter zum Andrehen einer Brennkraftmaschine, umfassend ein Zwischenlager (2) mit einem ringförmigen Verzahnungsbereich (3) mit einem Basisabschnitt (4) und daran ausgebildeten Verzahnungsabschnitten (5) zum lagernden Aufnehmen von Zahnrädern, wobei der Verzahnungsbereich (3) aus einem Material hergestellt ist, **dadurch gekennzeichnet, dass**
das Zwischenlager (2) als Kunststoffzwischenlager ausgebildet ist, der Verzahnungsbereich (3) als Verbundverzahnungsbereich (8) ausgebildet ist, in dem Mittel zur Erhöhung einer Verzahnungsbeständigkeit integriert, nämlich eingesetzt, eingepresst und/oder umspritzt, sind, sodass die Mittel zumindest teilweise in dem Basisabschnitt (4) und/oder in den Verzahnungsabschnitten (5) integriert sind, wobei die Mittel als mindestens ein, zumindest teilweise an die Kontur des Verzahnungsbereichs (3) angepasster ringförmiger Verstärkungskörper (6) aus einem unterschiedlichen Material gegenüber dem Material des Verzahnungsbereiches (3) ausgebildet sind.

2. Zwischenlagereinrichtung (1) nach Anspruch 1, **dadurch gekennzeichnet, dass** die der Verbundverzahnungsbereich (8) und/oder die Mittel sich im Wesentlichen über den gesamten Verzahnungsbereich (3) erstrecken.

3. Zwischenlagereinrichtung (1) nach einem der vorherigen Ansprüche 1 bis 2, **dadurch gekennzeichnet, dass**
der Verzahnungsbereich (3) im Wesentlichen aus einem Thermoplastwerkstoff besteht.

4. Zwischenlagereinrichtung (1) nach einem der vorherigen Ansprüche 1 bis 3 , **dadurch gekennzeichnet, dass**
die Mittel aus einem gegenüber dem Material des Verzahnungsbereiches (3), insbesondere gegenüber einem Thermoplastwerkstoff, festigkeitsbeständigerem Material, insbesondere ausgewählt aus der Gruppe umfassen Stahl, Sinterstahl, Duroplastwerkstoff und dergleichen, hergestellt sind.

5. Zwischenlagereinrichtung (1) nach einem der vorherigen Ansprüche 1 bis 4, **dadurch gekennzeichnet, dass**
die Mittel Ausnehmungen aufweisen, in welchen das Material des Verzahnungsbereichs (3) zumindest teilweise hereinragt, für eine optimierte Integration der Mittel in den Verzahnungsbereich (3).

6. Zwischenlagereinrichtung (1) nach einem der vorherigen Ansprüche 1 bis 5, **dadurch gekennzeichnet, dass**
der Verzahnungsbereich (3) als ringförmiger Zahnradhohlträger ausgebildet ist, und die als ein in dem Basisabschnitt (4) umlaufender Ring mit in die Verzahnungsabschnitte (5) hereinragenden Anformungen (7, 7a) ausgebildeten Mittel derart integriert sind, dass sich die Mittel im Wesentlichen in umfänglicher und radialer Richtung in dem Verzahnungsbereich (3) erstrecken.

7. Andrehvorrichtung, insbesondere ein Starter zum Andrehen einer Brennkraftmaschine, umfassend ein Zwischenlager mit einer Lagerstelle für eine Abtriebswelle, **dadurch gekennzeichnet, dass**
das Zwischenlager als eine Zwischenlagereinrichtung (1) ausgebildet ist, umfassend ein Zwischenlager (2) mit einem ringförmigen Verzahnungsbereich (3) mit einem Basisabschnitt (4) und daran ausgebildeten Verzahnungsabschnitten (5), zum lagernden Aufnehmen von Zahnrädern, wobei das Zwischenlager (2) als Kunststoffzwischenlager ausgebildet ist, der Verzahnüngsbereich (3) als Verbundverzahnungsbereich (8) ausgebildet ist, in dem Mittel zur Erhöhung einer Verzahnungsbeständigkeit integriert sind, nämlich eingesetzt, eingepresst und/oder umspritzt sind, sodass die Mittel zumindest teilweise in dem Basisäbschnitt (4) und/oder in den Verzahnungsabschnitten (5) integriert sind, wobei die Mittel als mindestens ein, zumindest teilweise an die Kontur des Verzahnungsbereichs (3) angepasster ringförmiger Verstärkungskörper (6) aus einem unterschiedlichen Material gegenüber dem Material des Verzahnungsbereichs (3) ausgebildet sind.

8. System umfassend eine Brennkraftmaschine und einen Starter zum Andrehen der Brennkraftmaschine, **dadurch gekennzeichnet, dass** der Starter zum Andrehen der Brennkraftmaschine als Andrehvorrichtung umfassend ein Zwischenlager mit einer Lagerstelle für eine Abtriebswelle ausgebildet ist, wobei das Zwischenlager als eine Zwischenlagereinrichtung (1) ausgebildet ist, umfassend einen ringförmigen Verzahnungsbereich (3) mit einem Basisabschnitt (4) und daran ausgebildeten Verzahnungsabschnitten (5), zum lagernden Aufnehmen von Zahnrädern, wobei das Zwischenlager (2) als Kunststoffzwischenlager ausgebildet ist, der Verzahnungsbereich (3) als Verbundverzahnungsbereich (8) ausgebildet ist, in dem Mittel zur Erhöhung einer Verzahnungsbeständigkeit integriert sind, nämlich eingesetzt, eingepresst und/oder umspritzt sind, sodass die Mittel zumindest teilweise in dem Basisabschnitt (4) und/oder in den Verzahnungsabschnitten (5) integriert sind, wobei die Mittel als mindestens ein, zumindest teilweise an die Kontur des Verzahnungsbereichs (3) angepasster ringförmiger Verstärkungskörper (6) aus einem unterschiedlichen Material gegenüber dem Material des Verzahnungsbereichs (3) ausgebildet sind.

## Claims

1. Intermediate bearing device (1) for a cranking apparatus, in particular for a starter for cranking an internal combustion engine, comprising an intermediate bearing (2) with an annular toothing region (3) with a base section (4) and toothing sections (5) formed thereon for the mounting, with bearing action, of gearwheels, wherein the toothing region (3) is produced from one material, **characterized in that** the intermediate bearing (2) is in the form of a plastics intermediate bearing, the toothing region (3) is in the form of a composite toothing region (8), into which means for increasing a toothing durability are integrated, specifically inserted, pressed and/or insert moulded, such that the means are at least partially integrated in the base section (4) and/or in the toothing sections (5), wherein the means are in the form of at least one annular reinforcement body (6) which is at least partially adapted to the contour of the toothing region (3) and which is composed of a different material than the material of the toothing region (3).

2. Intermediate bearing device (1) according to Claim 1, **characterized in that** the composite toothing region (8) and/or the means extend substantially over the entire toothing region (3).

3. Intermediate bearing device (1) according to either of the preceding Claims 1 and 2, **characterized in that**
the toothing region (3) is composed substantially of a thermoplastic material.

4. Intermediate bearing device (1) according to one of the preceding Claims 1 to 3, **characterized in that**
the means are produced from a material which is of greater strength and durability than the material of the toothing region (3), in particular than a thermoplastic material, and which is selected in particular from the group comprising steel, sintered steel, thermosetting material and the like.

5. Intermediate bearing device (1) according to one of the preceding Claims 1 to 4, **characterized in that**
the means have recesses into which the material of the toothing region (3) at least partially protrudes for optimized integration of the means into the toothing region (3).

6. Intermediate bearing device (1) according to one of the preceding Claims 1 to 5, **characterized in that**
the toothing region (3) is in the form of an annular, hollow gearwheel carrier, and the means, which are in the form of a ring which is of encircling form in the base section (4) and which has integrally formed portions (7, 7a) protruding into the toothing sections (5), are integrated such that the means extend substantially in a circumferential and radial direction in the toothing region (3).

7. Cranking apparatus, in particular a starter for cranking an internal combustion engine, comprising an intermediate bearing having a bearing point for a drive output shaft,
**characterized in that**
the intermediate bearing is in the form of an intermediate bearing device (1), comprising an intermediate bearing (2) with an annular toothing region (3) with a base section (4) and toothing sections (5) formed thereon for the mounting, with bearing action, of gearwheels, wherein the intermediate bearing (2) is in the form of a plastics intermediate bearing, the toothing region (3) is in the form of a composite toothing region (8), into which means for increasing a toothing durability are integrated, specifically inserted, pressed and/or insert moulded, such that the means are at least partially integrated in the base section (4) and/or in the toothing sections (5), wherein the means are in the form of at least one annular reinforcement body (6) which is at least partially adapted to the contour of the toothing region (3) and which is composed of a different material than the material of the toothing region (3).

8. System comprising an internal combustion engine and a starter for cranking the internal combustion engine, **characterized in that** the starter for cranking the internal combustion engine is in the form of a cranking apparatus comprising an intermediate bearing with a bearing point for a drive output shaft, wherein the intermediate bearing is in the form of an intermediate bearing device (1), comprising an annular toothing region (3) with a base section (4) and toothing sections (5) formed thereon for the mounting, with bearing action, of gearwheels, wherein the intermediate bearing (2) is in the form of a plastics intermediate bearing, the toothing region (3) is in the form of a composite toothing region (8), into which means for increasing a toothing durability are integrated, specifically inserted, pressed and/or insert moulded, such that the means are at least partially integrated in the base section (4) and/or in the toothing sections (5), wherein the means are in the form of at least one annular reinforcement body (6) which is at least partially adapted to the contour of the toothing region (3) and which is composed of a different material than the material of the toothing region (3).

## Revendications

1. Système de palier intermédiaire (1) pour un dispositif de démarrage, en particulier pour un démarreur pour démarrer un moteur à combustion interne, comprenant un palier intermédiaire (2) avec une région de denture annulaire (3) avec une portion de base (4) et des portions de denture (5) réalisées sur celle-ci pour recevoir et supporter des roues dentées, la région de denture (3) étant constituée d'un matériau, **caractérisé en ce que** le palier intermédiaire (2) est réalisé sous forme de palier intermédiaire en plastique, la région de denture (3) est réalisée sous forme de région de denture composite (8) dans laquelle sont intégrés, c'est-à-dire insérés, pressés et/ou surmoulés, des moyens pour augmenter une résistance de la denture, de telle sorte que les moyens soient intégrés au moins en partie dans la portion de base (4) et/ou dans les portions de denture (5), les moyens étant réalisés sous forme d'au moins un corps de renforcement (6) de forme annulaire au moins en partie adapté au contour de la région de denture (3), en un matériau différent du matériau de la région de denture (3).

2. Système de palier intermédiaire (1) selon la revendication 1, **caractérisé en ce que** la région de denture composite (8) et/ou les moyens s'étendent essentiellement sur toute la région de denture (3).

3. Système de palier intermédiaire (1) selon l'une quelconque des revendications précédentes 1 et 2, **caractérisé en ce que** la région de denture (3) se compose essentiellement d'un matériau thermoplastique.

4. Système de palier intermédiaire (1) selon l'une quelconque des revendications précédentes 1 à 3, **caractérisé en ce que** les moyens sont fabriqués à partir d'un matériau plus solide par rapport au matériau de la région de denture (3), notamment par rapport à un matériau thermoplastique, notamment sont fabriqués à partir d'un matériau choisi parmi le groupe comprenant l'acier, l'acier fritté, un matériau duroplastique et similaires.

5. Système de palier intermédiaire (1) selon l'une quelconque des revendications précédentes 1 à 4, **caractérisé en ce que** les moyens présentent des évidements dans lesquels le matériau de la région de denture (3) pénètre au moins en partie, pour une intégration optimisée des moyens dans la région de denture (3).

6. Système de palier intermédiaire (1) selon l'une quelconque des revendications précédentes 1 à 5, **caractérisé en ce que** la région de denture (3) est réalisée sous forme de support creux annulaire de roue dentée, et les moyens réalisés sous la forme d'une couronne périphérique dans la portion de base (4), comprenant des formations (7, 7a) pénétrant dans les portions de denture (5), sont intégrés de telle sorte que les moyens s'étendent essentiellement dans la direction périphérique et radiale dans la région de denture (3).

7. Dispositif de démarrage, en particulier démarreur pour démarrer un moteur à combustion interne, comprenant un palier intermédiaire avec un point de palier pour un arbre de prise de force, **caractérisé en ce que** le palier intermédiaire est réalisé sous forme de système de palier intermédiaire (1), comprenant un palier intermédiaire (2) avec une région de denture annulaire (3) avec une portion de base (4) et des portions de denture (5) réalisées sur celle-ci pour recevoir et supporter des roues dentées, le palier intermédiaire (2) étant réalisé sous forme de palier intermédiaire en plastique, la région de denture (3) étant réalisée sous forme de région de denture composite (8) dans laquelle sont intégrés, c'est-à-dire insérés, pressés et/ou surmoulés, des moyens pour augmenter une résistance de la denture, de telle sorte que les moyens soient intégrés au moins en partie dans la portion de base (4) et/ou dans les portions de denture (5), les moyens étant réalisés sous forme d'au moins un corps de renforcement (6) de forme annulaire au moins en partie adapté au contour de la région de denture (3), en un matériau différent du matériau de la région de denture (3).

8. Système comprenant un moteur à combustion interne et un démarreur pour démarrer le moteur à combustion interne, **caractérisé en ce que** le démarreur pour démarrer le moteur à combustion interne est réalisé sous forme de dispositif de démarrage comprenant un palier intermédiaire avec un point de palier pour un arbre de prise de force, le palier intermédiaire étant réalisé sous forme de système de palier intermédiaire (1), comprenant une région de denture annulaire (3) avec une portion de base (4) et des portions de denture (5) réalisées sur celle-ci pour recevoir et supporter des roues dentées, le palier intermédiaire (2) étant réalisé sous forme de palier intermédiaire en plastique, la région de denture (3) étant réalisée sous forme de région de denture composite (8) dans laquelle sont intégrés, c'est-à-dire insérés, pressés et/ou surmoulés, des moyens pour augmenter une résistance de la denture, de telle sorte que les moyens soient intégrés au moins en partie dans la portion de base (4) et/ou dans les portions de denture (5), les moyens étant réalisés sous forme d'au moins un corps de renforcement (6) de forme annulaire au moins en partie adapté au contour de la région de denture (3), en un matériau différent du matériau de la région de denture (3).
